# EUROPÄISCHE PATENTANMELDUNG

(11) **EP 1 944 692 A1**
(43) Veröffentlichungstag der Anmeldung: **16.07.2008**
(21) Anmeldenummer: 07124139.2
(22) Anmeldetag: 28.12.2007
(51) Int. Cl.: G06F 9/46, G05B 19/418

(54) **Automatisierungsanlage mit exklusiven Netzwerkverbindungen**

(30) Priorität: 29.12.2006 DE 102006062093
(71) Anmelder: Lenze Drive Systems GmbH, 31855 Aerzen (DE)
(72) Erfinder: Hartmann, Elmar, 31855 Aerzen (DE); Roettinger, Andreas, 32427 Minden (DE)
(74) Vertreter: Leonhard, Frank Reimund

(57) **Zusammenfassung**

Vorgeschlagen wird eine Automatisierungsanlage mit einem Serverrechner (1) als Feldgerät und mit zwei - Parametrierungen vornehmende - Clientrechnern (5,6,7). Es ist Zweck der Erfindung, diese Automatisierungsanlage so zu gestalten, dass gefährliche Betriebszustände und die daraus resultierenden Konflikte vermieden werden. Ein exklusives Handle (UUID) zum Aufbau und zum Erhalten einer exklusiven Kommunikations-Verbindung zwischen dem Serverrechner (1) und nur einem der Clientrechner (5) ist vorgesehen. Jeder Clientrechner (5,6,7) umfasst eine Einrichtung zum Erzeugen und Versenden von Anforderungen an den Serverrechner (1) und der Serverrechner (1) hat eine Einrichtung zum Erzeugen und Versenden von Antworten an jeden Clientrechner (5,6,7). Der Serverrechner (1) hat eine Einrichtung zum Erzeugen und Versenden von eindeutigen Nachrichten mit dem exklusive Handle (UUID), die so aufgebaut sind, dass sie in einem Kommunikationsnetzwerk eindeutig nur einem Clientrechner (5,6,7) zuordnungsfähig sind. Jeder Clientrechner (5,6,7) ist so geschaltet, an den Serverrechner (1) eine Anforderung zum Aufbau einer exklusiven Verbindung (ExVb) zu übermitteln. Der Serverrechner (1) übermittelt - wenn eine solche exklusive Verbindung aufbaufähig ist - eine Nachricht mit dem exklusiven Handle (UUID) an den anfordernden Clientrechner (5) zurück, welches diesem Rechner (5) den Status einer exklusiven Verbindung zum Parametrieren bewilligt und verleiht, aber keinem der anderen Clients (6,7) gleichzeitig diesen exklusiven Verbindungsstatus, wobei der Serverrechner (1), nachdem er diese exklusive Verbindung dem nur einen Clientrechner (5) bewilligt hat, nur noch solche Parametrierungen entgegennimmt, die das diesem Clientrechner übermittelte exklusive Handle mit sich führen.

## Beschreibung

Die Erfindung bezieht sich auf eine Automatisierungsanlage, insbesondere als Kommunikationsnetzwerk, mit mindestens einem Serverrechner und mindestens zwei Clientrechnern, zu denen exklusive Verbindungen aufzubauen sind.

Aus der US-A 6,339,793 ist ein File sharing system bekannt, das sich mit der alternativen Nutzung eines Speichers durch mehrere Clients befasst. Diese alternative Nutzung sorgt dafür, dass immer einer der Clients auf einen Share des Speichersystems zugreifen kann, also schreiben und lesen darf. Es können aber auch die anderen parallelen Clients das Speichersystem mit dem Share benutzen, indes nur zum Lesen. Dieses System befasst sich in dem Sinne nicht mit der Parametrierung und ist auch nicht so ausgebildet, dass das Speichersystem bestimmten Speicherzellen eine Bedeutung zumisst, beispielsweise im Sinne eines Parameters einer Automatisierungsanlage.

Aus der DE-A 102 14 541 ist ein Webserver mit integrierter Automatisierungs-Funktionalität bekannt. Server, welche über das Internet mit Clients verbunden sind und diesen Informationen, üblicherweise Internetseiten, zur Verfügung stellen, werden Webserver genannt. Ein solcher Webserver ist eine Applikation, welche auf einem oder mehreren Rechnern verteilt abläuft. Auf dem Webserver werden Daten zentral gespeichert, welche unabhängig vom jeweiligen Standort eines Clients von vielen verschiedenen Clients verwendet werden können. Als "Webserver" wird sowohl die auf einem Rechner ablaufende Softwareapplikation als auch der Rechner selbst bezeichnet.

In der modernen Automatisierungstechnik werden viele Parameter von Automatisierungskomponenten (AK) über Kommunikations-Bussysteme zugänglich gemacht. Häufig werden über diese Parameter grundlegende Verhaltenseigenschaften der Automatisierungskomponenten verändert, so dass es wichtig ist, Veränderungen kontrolliert durchzuführen.

Früher wurde dies sehr häufig dadurch sichergestellt, dass Geräte nur einen Parametrierzugang besaßen und immer nur ein einziger Anwender oder Bediener zur gleichen Zeit diese relevanten "Parameter" verändern konnte.

Moderne Automatisierungskomponenten (AK) oder Serverrechner verfügen häufig über eine Vielzahl von Kommunikations-Schnittstellen, die zum Teil noch multiclientfähig sind. Dies bedeutet, dass mehrere Bediener gleichzeitig unterschiedliche Aufträge an die Automatisierungskomponente oder den Serverrechner absetzen können. Durch Netzwerke wie das Ethernet, das Verbindungen nach dem TCP/IP-Protokoll ermöglicht, können beliebig viele Bediener auf den Serverrechner zugreifen. Werden nun Aufträge unkoordiniert abgesetzt, so kann es zu zumindest unsicheren Betriebszuständen kommen.

Es ist **Aufgabe der Erfindung**, eine Automatisierungsanlage zu schaffen, bei der solche gefährlichen Betriebszustände und die daraus resultierenden Konflikte vermieden werden.

Erfindungsgemäß wird diese Aufgabe dadurch gelöst, dass Mittel zum Aufbau einer exklusiven Kommunikationsverbindung zwischen dem mindestens einen Serverrechner und einem der Clientrechner vorgesehen sind; der Serverrechner ist ein Feldgerät, beispielsweise ein Sensor oder ein Aktor als Umrichter, und die Clients sind für seine Parametrierung vorgesehen. Das Schreiben erfolgt mittels einem Protokoll, und im Kommando oder im Protokoll wird das exklusive Handle mitgeführt. Es signalisiert dem Server, dass der Parameter geschrieben werden kann/darf (Anspruch 1). Das Schreiben ist bevorzugt ein Überschreiben eines alten Wertes des Parameters, oder eines Defaultwerts (Anspruch 3).

Die Parametrierung ist im fachmännischen Verständnis eine besondere Art der Speicherung. Der Schreibzugriff schreibt einen Parameter von einem Client auf den Server und sorgt dafür, dass dieser Parameter am Ort des Schreibens das Systemverhalten verändert. Der oder die Adresse, an der der Parameter geschrieben wird, hat eine Bedeutung für das System und ist nicht nur eine Adresse unter einer Vielzahl von Speicherzellen, die eine im Kontext des Parameters bedeutungslose Speichermenge repräsentieren, oder aber Speicherplatz im Sinne eines 10 KB großen Speichers oder Speicherbereiches, vielmehr ist der Parameter für die Automatisierungsanlage mit einer bestimmten Bedeutung versehen und hat bestimmungsgemäß eine Verwendung im System vorgesehen. Der Parameter ist eine Variable mit logischer Adressierung, kein Speicherbereich als bulk storage. Ein Nutzer weiß um die Adresse und die Bedeutung dieser Adresse als "der Parameter" mit der Adresse von beispielsweise 0FFF3 (hex). Meist heißt der Parameter auch eindeutig nach seiner logischen Adresse, oder ist über die physikalische Benennung, bspw. Maximaldrehzahl, Grenzlast, Polzahl oder Grenztemperatur oder Maximalstrom bekannt.

Die Vorteile der erfindungsgemäßen Automatisierungsanlage bestehen vor allem darin, dass zum Aufbau einer exklusiven Kommunikationsverbindung keine zusätzlichen Hardware- oder Software-Komponenten zur Überwachung des Zugriffs notwendig sind. Vielmehr findet automatisch ein Blocken des Schreibens von allen anderen Clientrechnern statt, solange mit dem einen Clientrechner die exklusive Kommunikationsverbindung besteht, nachdem sie vorher zugewiesen wurde.

Der Serverrechner oder die Automatisierungskomponente als Anforderungsempfänger entscheidet über die Bewilligung der angeforderten exklusiven Verbindung. Dies bedeutet, er selber hat Mittel und erzeugt das Symbol, welches einem Clientrechner Exklusivität gewährt. Dieses Symbol ist so ausgestaltet, dass es nur in dem Clientrechner Verwendung finden kann, so dass die Exklusivität nicht von anderen Clients unterlaufen werden kann. Das Symbol wird nur an den einen Clientrechner versendet, der die Anfrage an den Serverrechner zu einem Zeitpunkt abgesandt hatte, zu dem keine anderweitige Exklusivität bestand.

Auf diese Weise ermöglicht das erfindungsgemäße Kommunikationssystem eine leichte Diagnose und Statusabfrage, indem Parameterzugriffe zum Schreiben von Aufträgen, die ein die Exklusivität gewährleistendes Protokoll enthalten, nur an einer Komponente des Systems, nämlich an dem Serverrechner, erforderlich sind. Es ist daher kein zusätzlicher Aufwand durch den Einsatz von Schlüsseln erforderlich, wie dies bei einem Verschlüsselungssystem der Fall ist. Wegen des Wegfalls der Verschlüsselung wird auch keine auf die Verschlüsselung entfallende Rechenzeit benötigt.

Das erfindungsgemäße Kommunikationsnetzwerk lässt sich mit beliebigen Kommunikationskanälen, z.B. CAN, Profibus, Interbus, Ethernet, Powerlink betreiben.

Vorteilhafte Weiterbildungen der Erfindung ergeben sich aus den Unteransprüchen.

Der Clientrechner weist beispielsweise eine besondere Schnittstelle auf und erzeugt eine besondere Anfrage, die aufgrund der in ihr enthaltenen Bits oder eines Bitblocks oder eines spezifischen Protokolls zum Ausdruck bringt, dass der Clientrechner eine exklusive Verbindung zu dem Serverrechner wünscht.

Es ist mit Vorteil vorgesehen, dass der Serverrechner eine Einrichtung zum Erzeugen und Versenden von einmaligen Nachrichten umfasst. Solche Nachrichten können in dem gesamten Kommunikationsnetzwerk eindeutig einem bestimmten Clientrechner zugeordnet werden (kein Broadcast und keine Nachrichten zum Netzwerkmanagement). Dies bedeutet, dass der Serverrechner beispielsweise ebenfalls eine besondere Schnittstelle mit dem gewünschten Clientrechner aufweisen kann.

Die Erfindung bezieht sich auch auf ein Verfahren zum Betreiben eines Kommunikationsnetzwerks mit mindestens einem Serverrechner und mindestens zwei Clientrechnern (Anspruch 5), wobei eine Parametrierung des Servers zu erfolgen hat.

Erfindungsgemäß ist die Anlage dadurch gekennzeichnet, dass ein Clientrechner an einen Serverrechner eine Anfrage nach dem Aufbau einer exklusiven Verbindung schickt, dass darauf der Serverrechner, wenn er eine derartige exklusive Verbindung aufbauen kann, eine Nachricht mit einem eindeutigen Handle, wie z.B. ein UUID (= Universally Unique Identifier) oder eine Seriennummer einer AutomatisierungsKomponente, an den Clientrechner sendet, in der er diesem die Bewilligung mitteilt. Das Handle ist somit eine notwendige Anforderung.

Es ist vorgesehen, dass der Serverrechner, nachdem er die exklusive Verbindung zu dem Clientrechner mit der Übergabe des Handles bewilligt hat, nur noch solche schreibende Anforderungen entgegennimmt, die als Kennung in ihrem Kommando oder Protokoll das Handle enthalten.

Nach dem Verbindungsabbau wird das Handle wieder freigegeben.

Durch die Erfindung wird auch ein Verfahren zum Abbau einer exklusiven Verbindung zwischen einem Serverrechner und einem von mehreren Clientrechnern, dem zuvor eine schreibende Exklusivverbindung mit dem Serverrechner zugebilligt worden war, geschaffen. Hierbei fordert der Clientrechner beim Serverrechner oder der Serverrechner kündigt beim Clientrechner die Freigabe der exklusiven Verbindung an. Ein Ende der exklusiven Verbindung tritt ein, insbesondere für einen bestimmten Zeitpunkt oder für den Eintritt einer vorher bekannt gegebenen Bedingung. Mittels eines Antworttelegramms seitens des Clientrechners oder des Serverrechners wird die Exklusivität der Verbindung aufgegeben.

In einer weiteren vorteilhaften Ausgestaltung ist vorgesehen: Wenn innerhalb eines Clients, der eine exklusive Verbindung angefordert und erhalten hat, ein Problem auftritt, eine Möglichkeit besteht, die Kommunikation mit der AutomatisierungsKomponente ohne Kenntnis des Handles für die Exklusivverbindung wieder aufzunehmen. Dazu wird beispielsweise ein Kommando auf Protokollebene eingeführt, das dem Anwender einer Clientanwendung nur über spezielle Sicherheitsabfragen zugänglich gemacht wird und das Auflösen einer bestehenden Exklusivverbindung zulässt. Diese Sicherheitsabfrage kann darin bestehen, dass der problem-behaftete Client aufgefordert wird, sich mit einem Passwort zu identifizieren. Es kann aber auch ein spezieller Modus sein, in dem die Clientanwendung gestartet werden muss, um auch ohne exklusive Verbindung mit einem gesicherten Gerät kommunizieren zu können.

In Automatisierungsanlagen ist es üblich, dass neben Bediengeräten auch andere Automatisierungskomponenten als Clients an der Kommunikation teilnehmen. Diese führen ihre Kommunikationsaufgaben selbständig durch, so dass ein Bediener im laufenden Anlagenbetrieb hierauf keinen Einfluss nehmen kann.

Weiterhin können solche Komponenten oft nur Standardtelegramme erzeugen, so dass es schwierig erscheint, mit solchen Komponenten Telegramme für eine exklusive Verbindung zu kommunizieren. Würde nun eine exklusive Verbindung beispielsweise von einem Serverrechner, der etwa ein PC sein kann, angefordert und von diesem bewilligt, hätte dies zur Folge, dass die parallel ablaufende automatische Kommunikation mit einer Steuerung nicht mehr aufrecht erhalten bliebe. Die Steuerung ist in diesem Fall beispielsweise eine speicherprogrammierbare Steuerung (SPS).

Um dies zu vermeiden, ist gemäß der Erfindung vorgesehen, dass neben den Telegrammen zur exklusiven Kommunikation (des Schreibens) Telegramme verwendet werden, die einen (lesenden) Zugriff auf die Automatisierungskomponente auch ohne Schlüssel zulassen. Dies bedeutet, dass diese Telegramme (des Lesens) auch ohne das Handle, beispielsweise den UUID (Universally Unique IDentifier), vom Server bedient werden, aber nicht in schreibender (parametrierender) Weise, wenn das exklusive Handle im Protokoll fehlt.

Eine skalierbare Lösung kann darin bestehen, dass beispielsweise bei einer Ethernet-Verbindung nur einzelne Sockets als gesicherte Verbindungen ausgeführt werden. Die Lösung kann aber auch darin bestehen, dass nur einzelne Bussysteme mit der exklusiven Verbindung arbeiten.

Ebenso ist es möglich, eine Skalierung darüber zu erzielen, dass Leseaufträge ohne exklusive Verbindung arbeiten. Hierbei können nämlich keine Parameteränderungen auftreten. Hingegen setzen Schreibaufträge eine exklusive Verbindung voraus (Anspruch 1).

Als "Parameter" - die ohne exklusive Verbindung geändert werden dürfen - kommen solche "Parameter" in Betracht, die vom Anlagenbetreiber als unkritisch in Hinblick auf Wechselwirkungen eingestuft werden. Es kann daher durchaus möglich sein, dass die Uhrzeit ohne exklusive Verbindung gesetzt werden kann (als schreibender Zugriff).

Eine weitere Möglichkeit der Skalierung besteht darin, dass der Client Zugriffe auf einzelne Parameter, z.B. eine Maximaldrehzahl nur über die exklusive Verbindung zulässt, während andere Parameter auch ohne eine exklusive Verbindung verändert werden können. Die von dem exklusiven Handle gesteuerten Schreibzugriffe sind dann auf eine kleinere Gruppe von Parametern beschränkt. Diese werden exklusiv nur von einem gerade das Handle besitzenden Client geschrieben (parametriert).

Eine weitere Möglichkeit der Skalierung besteht in der Beschränkung des Betriebs von Exklusivverbindungen auf bestimmte Kommunikationskanäle. Wenn ein CAN-Bus zum Einsatz kommt, könnte der Server die exklusive Verbindung beispielsweise nur auf einen SDO-Kanal beziehen. Andere SDO-Kanäle könnten dann von dieser exklusiven Verbindung unberührt bleiben.

So ist es denkbar, dass mehrere Clientrechner, die ebenfalls PCs sein können, über das Ethernet mit den Automatisierungs-Komponenten kommunizieren und gegen ungewollte Mehrfachparametrierung geschützt werden sollen. Die PCs selber und ihre Bediener werden über die Nutzung der exklusiven Verbindung davor geschützt, dass ungewollte Mehrfachparametrierungen in der Automatisierungskomponente durchgeführt werden.

Ein parallel auf der Automatisierungskomponente vorhandener CAN-Kanal arbeitet hingegen ungeschützt und ist beispielsweise für Steuerungen immer offen. Unter Steuerungen werden hier SPS-Steuerungen verstanden, die in bestimmten Ausführungsformen auch automatisch kommunizieren und welche die exklusiven Verbindungen nicht nutzen können.

Das Verfahren kann als reine Softwarelösung in einer Automatisierungskomponente integriert werden. Eine weitere Möglichkeit der Realisierung besteht darin, dass das Verfahren in einer Zusatzbaugruppe zur Automatisierungskomponente integriert und somit nachgerüstet werden kann. Im Fall einer reinen Softwarelösung bildet der UUID eine eindeutige Seriennummer, welche beim Aufbau (und bei dem Erhalt) der exklusiven Kommunikation verwendet wird. Damit sind keine Hardwarekomponenten außer der Automatisierungskomponente selber erforderlich.

Eine Hardwarekomponente kann beispielsweise eine Anschaltbaugruppe sein, die die Vergabe des Handles und den Aufbau der exklusiven Kommunikation leistet. Die Telegramme zum Austausch der Parameter mit der Automatisierungskomponente werden transparent von der Anschaltbaugruppe zur Automatisierungskomponente durchgereicht.

Gemäß der Erfindung ist die Automatisierungsanlage auch eine Zusammenfügung oder ein Zusammenwirken mehrerer Automatisierungskomponenten.

Die Automatisierungsanlage kann ein einziges oder mehrere Kommunikationsnetzwerke umfassen, die alle von demselben Server unterstützt werden. Im Sinne der Erfindung sind zwar der Server und ein Client die handelnden Komponenten im Rahmen einer Exklusivverbindung. Als Kommunikationsnetzwerk wird jedoch nur ein solches Netzwerk verstanden, das immer jeweils einen Server und eine Mehrzahl von Clients einschließt (zumindest zwei davon). Dies schließt selbstverständlich nicht aus, dass der Server und/oder einer der Clients gleichzeitig eine Funktion nicht nur in einem einzigen Kommunikationsnetzwerk erfüllen.

Nachstehend wird die Erfindung von Ausführungsbeispielen anhand der Figuren näher erläutert.
- **Figur 1**: ist eine schematische Darstellung eines Kommunikationsnetzes mit einem Serverrechner 1, der auch als Automatisierungskomponente bezeichnet wird;
- **Figur 2**: veranschaulicht den Ablauf einer Kommunikation zwischen dem Serverrechner und zwei Clientrechnern.

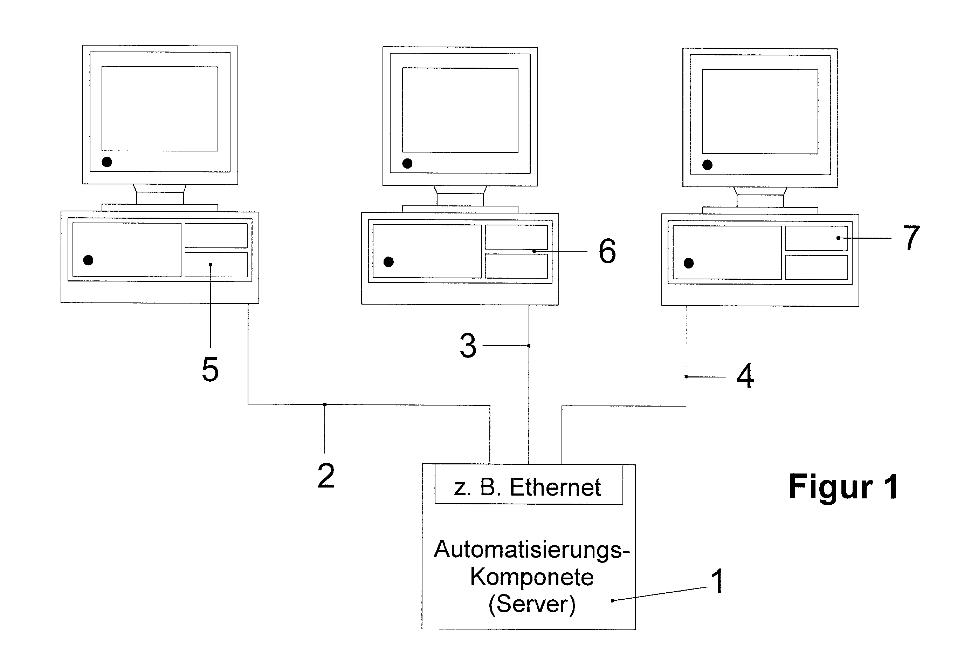

Ein Serverrechner 1 nach Figur 1 ist über Datenleitungen 2 bis 4 mit verschiedenen untergeordneten Clientrechnern 5 bis 7 verbunden. Zwischen dem Serverrechner 1 und den Clientrechnern besteht eine eindeutige Beziehung, wie sie für die Automatisierungstechnik erforderlich ist. Der Serverrechner 1 als Feldgerät kann ein Sensor oder ein Aktor sein, beispielsweise auch ein Umrichter. Es wird deshalb Automatisierungskomponente genannt.

Es ist keine Überwachungskomponente erforderlich, die als Vermittlungsstelle fungiert. Hingegen ist es der Serverrechner 1 selbst, der eine exklusive Verbindung genehmigt oder ablehnt und andere Verbindungen sperrt. Nach Bewilligung der exklusiven Verbindung erfolgt die schreibende Kommunikation über besondere Telegramme, denen ein Berechtigungsschlüssel mitgegeben ist.

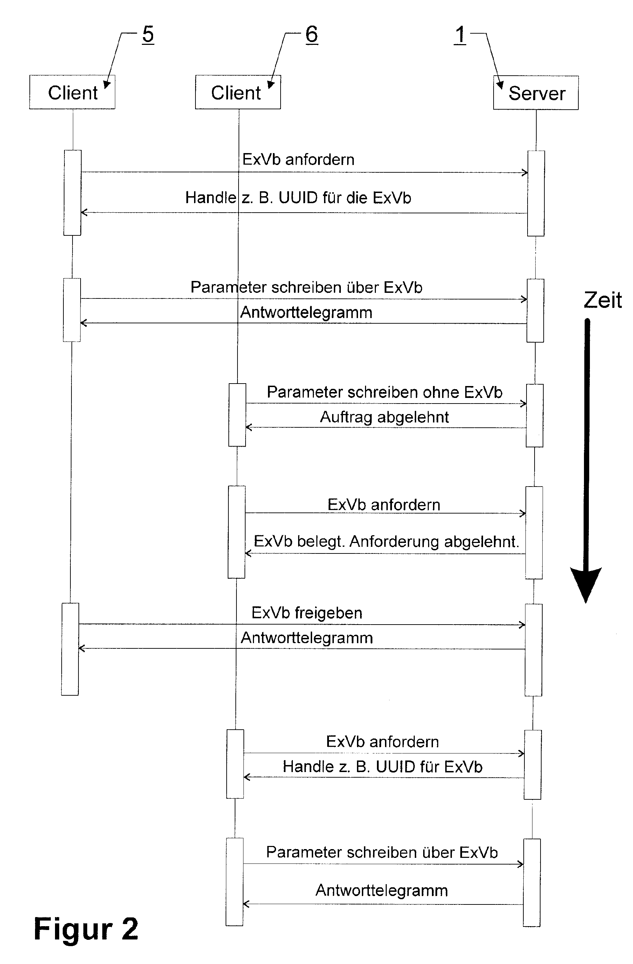

Somit läuft eine Kommunikation zwischen dem Serverrechner 1 und zwei Clientrechnern 5 und 6 beispielsweise in der folgenden Weise ab:
Der Clientrechner 5 von Figur 1 fordert nach Figur 2 von dem Serverrechner 1 eine Exklusivverbindung (=ExVb) an.
Darauf übermittelt der Server 1 an den Clientrechner 5 ein Handle, welches beispielsweise eine UUID ist. Darauf teilt der Clientrechner 5 dem Serverrechner über die so aufgebaute Exklusivverbindung - insbesondere einen oder mehrere zu schreibende - Parameter mit. Darauf erzeugt und übermittelt der Serverrechner 1 ein Antworttelegramm an den Client 5 über die bestehende Exklusivverbindung.

Aufgrund der zwischen dem Serverrechner 1 und dem Clientrechner 5 bestehenden Exklusivverbindung kann eine weitere Verbindung zwischen dem Clientrechner 6 oder 7 und dem Serverrechner 1 nicht mehr aufgebaut werden. Dies führt dazu, dass auf eine Anforderung eines dieser Rechner 6 oder 7 mit dem Inhalt, "Parameter schreiben ohne ExVb" (ExVb entspricht einer Exklusivverbindung) der "Auftrag" (die Beantwortung der Anforderung) durch den Serverrechner 1 abgelehnt wird.

Wenn in einem späteren Schritt einer der Clientrechner 6 oder 7 gar eine Exklusivverbindung anfordert, wird auch diese Anforderung mit einem Telegramm des Rechners 1 so abgelehnt, dass eine Exklusivverbindung ExVb bereits belegt ist.

In einer zu einem späteren Zeitpunkt erfolgenden Anforderung eines der Clientrechner auf Freigabe der Exklusivverbindung, erhält dieser von dem Serverrechner 1 ein Antworttelegramm, mit dem dann die Exklusivverbindung abgebaut wird. Damit steht der Serverrechner 1 wieder für eine exklusive Kommunikation mit anderen Clientrechnern zur Verfügung.

Bei einer erneuten Anfrage beispielsweise des Clientrechners 6 an den Serverrechner 1, auf Aufbau einer exklusiven schreibenden Verbindung, übermittelt der Server ein neues Handle, beispielsweise eine andere UUID für die neue Exklusivverbindung an den Clientrechner 6. Diese ist im Netz auch eindeutig. Darauf schreibt der Clientrechner 6 in Form einer Antwort auf diese Freigabe über die Exklusivverbindung zumindest einen Parameter an den Serverrechner 1, die/den dieser über ein Antworttelegramm beantwortet (sog. "Parametrieren").

## Patentansprüche

1. **Automatisierungsanlage** mit mindestens einem Serverrechner (1) als Feldgerät und mit mindestens zwei - Parametrierungen vornehmende - Clientrechnern (5,6,7),
- wobei ein exklusives Handle (UUID) zum Aufbau und zum Erhalten einer exklusiven Kommunikations-Verbindung zwischen dem mindestens einen Serverrechner (1) und nur einem der mehreren Clientrechner (5) vorgesehen ist;
- wobei jeder der Clientrechner (5,6,7) eine Einrichtung zum Erzeugen und Versenden von Anforderungen an den Serverrechner (1) und der mindestens eine Serverrechner (1) eine Einrichtung zum Erzeugen und Versenden von Antworten an jeden der Clientrechner (5,6,7) umfasst; und
- wobei der mindestens eine Serverrechner (1) eine Einrichtung zum Erzeugen und Versenden von einmaligen (eindeutigen) Nachrichten mit dem exklusive Handle (UUID) umfasst, die so aufgebaut sind, dass sie in einem Kommunikationsnetzwerk, in welches der zumindest eine Server und die zumindest zwei Clients eingebunden sind, eindeutig nur einem der Clientrechner (5,6,7) zuordnungsfähig sind; und wobei jeder (5) der Clientrechner (5,6,7) so geschaltet ist, an einen der Serverrechner (1) eine Anforderung zum Aufbau einer exklusiven Verbindung (ExVb) zu übermitteln in Form von senden oder schicken;
- (darauf) der eine Serverrechner (1) - wenn eine solche exklusive Verbindung aufbaufähig ist - eine Nachricht mit dem exklusiven Handle (UUID) an den anfordernden Clientrechner (5) zurück übermittelt, welches diesem Rechner (5) den Status einer exklusiven Verbindung zum Parametrieren bewilligt und verleiht, aber keinem der anderen Clients (6,7) gleichzeitig diesen exklusiven Verbindungsstatus, wobei der eine der Serverrechner (1), nachdem er diese exklusive Verbindung zu dem einen Clientrechner (5) bewilligt hat, nur noch solche Parameter schreibende Anforderungen entgegennimmt, die in ihrem Kommando oder Protokoll das diesem einen Clientrechner übermittelte exklusive Handle enthalten.

2. Automatisierungsanlage nach Anspruch 1, wobei Leseanforderungen von anderen Clientrechnern als dem aktuell über eine exklusive Verbindung belegten einen Clientrechner (5) vom Serverrechner (1) beantwortet werden.

3. Automatisierungsanlage nach Anspruch 1, wobei während einer exklusiven Verbindung (ExVb) Parameter im Serverrechner (1) überschrieben werden.

4. Automatisierungsanlage nach Anspruch 3, wobei während der exklusiven Verbindung (ExVb) Parameter geschrieben werden, welche grundlegende Verhaltenseigenschaften der Automatisierungsanlage oder einer der Automatisierungs-Komponenten der Anlage verändern.

5. **Verfahren zum Betreiben** einer Automatisierungsanlage und zu einer Parametrisierung eines Serverrechners (1), insbesondere eines Kommunikationsnetzwerks für die Automatisierungsanlage, wobei die Anlage den mindestens einen Serverrechner (1) und mindestens zwei Clientrechner (5,6,7), aufweist
- einer (5) der Clientrechner (5,6,7) an den mindestens einen Serverrechner (1) eine Anforderung zum Aufbau einer exklusiven Verbindung (ExVb) übermittelt, sendet oder schickt;
- darauf der Serverrechner (1) - wenn eine solche exklusive Verbindung aufbaufähig ist - eine Nachricht mit einem exklusiven Handle (UUID) an den Clientrechner (5) zurück übermittelt, welches diesem Rechner (5) den Status einer exklusiven Verbindung bewilligt und verleiht, aber keinem der anderen Clients (6,7) gleichzeitig diesen exklusiven Verbindungsstatus.

6. Verfahren nach Anspruch 5, wobei der Serverrechner (1), nachdem er die exklusive Verbindung zu dem einen Clientrechner (5) bewilligt hat, nur noch solche Parameter schreibende Anforderungen entgegennimmt, die in ihrem Kommando oder Protokoll das exklusive Handle enthalten.

7. Verfahren nach Anspruch 5, wobei Leseanforderungen von anderen Clientrechnern als dem aktuell über eine exklusive Verbindung belegten einen Clientrechner (5) vom Serverrechner (1) beantwortet werden.

8. Verfahren nach Anspruch 5, wobei während einer exklusiven Verbindung (ExVb) Parameter im Serverrechner (1) überschrieben werden.

9. Verfahren nach Anspruch 8, wobei während der exklusiven Verbindung (ExVb) Parameter überschrieben werden, welche grundlegende Verhaltenseigenschaften der Automatisierungsanlage oder einer der Automatisierungs-Komponenten der Anlage verändern.

10. Verfahren nach Anspruch 5, wobei die Parametrisierung von dem Clientrechner mit dem Status der exklusiven Verbindung auf Protokollbasis erfolgt.

11. **Verfahren zum Abbau** einer exklusiven Verbindung (ExVb) zwischen einem Serverrechner (1) und einem (5) von mehreren Clientrechnern (5,6,7), welchem einen Clientrechner zuvor eine Exklusivverbindung mit dem Serverrechner (1) zugebilligt worden war, die noch besteht, und wobei eine Parametrierung des Serverrechners (1) während der exklusiven Verbindung (ExVb) erfolgte,
- wobei der eine Clientrechner (5) beim Serverrechner (1) die Freigabe der exklusiven Verbindung anfordert oder der Serverrechner (1) dem einen Clientrechner (5) ein Ende der exklusiven Verbindung ankündigt, insbesondere für einen bestimmten Zeitpunkt oder für den Eintritt einer vorher festgelegten Bedingung, und dass
- nach der Anforderung oder der Ankündigung über ein Antworttelegramm seitens des einen Clientrechners (5) bzw. des Serverrechners (1) die Exklusivität der Verbindung aufgegeben wird.
